Europäisches Patentamt

European Patent Office

Office européen des brevets

(11) Publication number: **0 071 724**
A1

# EUROPEAN PATENT APPLICATION

(21) Application number: **82105473.1**

(22) Date of filing: **22.06.82**

(51) Int. Cl.³: **H 01 R 13/703, G 02 B 23/08**

(30) Priority: **23.06.81 JP 96877/81**

(43) Date of publication of application: **16.02.83**
**Bulletin 83/7**

(84) Designated Contracting States: **AT BE CH DE FR GB IT LI NL SE**

(71) Applicant: **OLYMPUS OPTICAL CO., LTD.,**
**43-2, 2-chome, Hatagaya Shibuya-ku, Tokyo (JP)**

(72) Inventor: **Yamamoto, Tsutomu,**
**B-705 Takao-park-height, 1231-19, Hatsuzawa-machi,**
**Hachioji-shi Tokyo (JP)**

(74) Representative: **KUHNEN & WACKER**
**Patentanwaltsbüro, Schneggstrasse 3-5 Postfach 1729,**
**D-8050 Freising (DE)**

(54) Explosion-proof electric apparatus.

(57) An electric apparatus comprises an electric plug (29) electrically to be connected to an external power plug socket (28), a power supply circuit including a transformer (12) and a lamp circuit substrate, a power supply switch (33) which is connected between the electric plug (29) and power supply circuit to effect electric switching between the electric plug and power supply circuit, and a detection element (32) which is projectively provided on the electric plug (29) and actuated when the electric plug is inserted into the power plug socket to close the power supply switch.

- 1 -

Electric apparatus   TITLE MODIFIED
see front page

This invention relates to an explostion-proof electric apparatus applied to, for example, an endoscope light source device.

The known endoscope light source device comprises a ventilation electric fan held in the case of said light source device. The electric fan draws external air into the case to cool a lamp set therein and, after cooling, discharges the air to the outside. In other words, said electric fan cools the heated parts of the lamp by applying external air. Where, however, or for example, an industrial endoscope is applied in an atmosphere of an inflammable gas, the gas tends to be ignited with a possible explosion. Consequently the endoscope lamp device should be rendered explosion-proof.

Where, however, an electric plug is inserted into a commercial power supply plug socket with a power switch closed, then a short arc appears between the contacts, probably leading to the occurrence of an explosion, even though the lamp device may be rendered explosion-proof.

It is accordingly the object of this invention to provide a safe electric apparatus in which an explosion is little likely to occur even when an endoscope is applied in an atmosphere containing an inflammable gas.

To attain the above-mentioned object, this invention provides an electric apparatus which comprises:

an electric plug electrically connected to an external power plug socket;

a power supply circuit;

a power supply switch which is connected between the electric plug and power supply circuit to effect electric switching between the electric plug and power supply circuit; and

a detection element which is projectively provided on the electric plug and actuated when the electric plug is inserted in the power plug socket to close the power supply switch.

This invention can be more fully understood from the following detailed description when taken in conjunction with the accompanying drawings, in which:

Figs. 1 to 5 show an endoscope lamp device embodying this invention:

Fig. 1 is a side view of the whole of a lamp device connected to a gas cylinder; Fig. 2 is a longitudinal sectional view of the whole of said lamp device; Fig. 3 is an enlarged sectional view of air outlets; Fig. 4 is an oblique view of a pressure-senser; and Fig. 5 indicates the relative positions of various switches and a power supply circuit.

Description is now given with reference to the accompanying drawings of an electric implement embodying this invention which is applied to an endoscope lamp device.

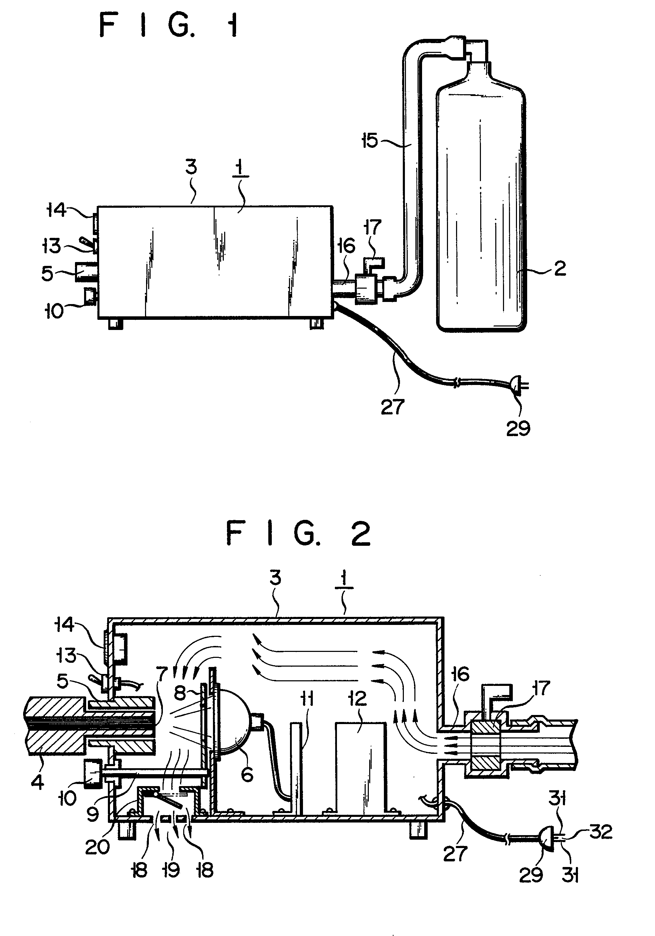

Referring to Fig. 1, reference numeral 1 denotes an endoscope light source apparatus. Connected to the light source apparatus 1 is a cylinder 2 acting as a gas source which holds, for example, an uninflammable gas in a compressed state. A case 3 of the endoscope light source apparatus 1 is rendered airtight. The front wall of the case 3 is penetrated by a connector inlet 5, to which an endoscope light guide connector 4 is fitted. A lamp 6 is set inside of said connector inlet 5. Light beams emitted from the lamp 6 are converted to a light-receiving end face 7 of the light guide connector 4 fitted into the connector inlet 5. A light quantity-controlling shutter 8 is interposed between the lamp 6 and connector inlet 5. This light quantity-controlling shutter 8 is connected to one end of an operation rod 9 penetrating the case 3 in an airtight state. The light quantity-controlling shutter 8 is actuated by a light quantity-controlling knob 10 fitted to the opposite end of the operation rod 9. Parts such as a lamp circuit substrate 11 and transformer 12 are received in the case 3. The front outer wall of the case 3 is fitted with a power supply switch 13 and pressure gauge 14. This pressure gauge 14 detects gas pressure prevailing in the case 3 and displays the detected gas pressure.

The rear wall of the case 3 is provided with a gas inlet 16, to which a gas hose 15 of the cylinder 2 is attached. The gas inlet 16 is provided with a changeover cock 17 to open or close the gas inlet 16 as need requires. When opened, the cock 17 enables a compressed uninflammable gas to be taken into the case from the cylinder 2.

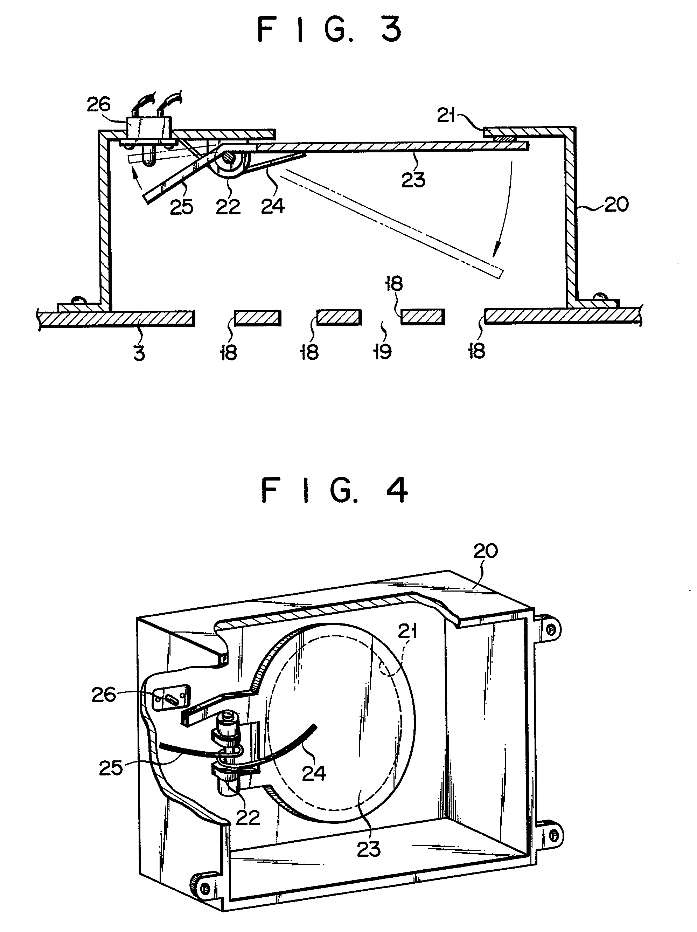

A large number of small orifices 18 penetrate that portion of the bottom wall of the case 3 which lies near the front wall thereof. The inner wall of that portion of the bottom wall which is drilled with the numerous small orifices 18 is provided with a case 20 to which an intracase pressure-sensing board is fitted, and whose opening communicates with said small orifices 18. A gas passage 21 for causing the interior of said case 20 to communicate with that of the case 3 of the endoscope light source apparatus 1 is formed in the upper wall of said case 20 (Fig. 3). An intracase pressure-sensing board 23 is provided in said case 20 in such a manner that one end of said sensing board 23 is swingably set inside of the upper wall of said case 20 by means of a hinge 22. Fitted to this hinge 22 is a torsion spring 24, one end of which is engaged with the intracase pressure-sensing board 23, and the other end of which is engaged with the upper wall of the case 20. The torsion spring 24 urges the intracase pressure-sensing board 23 in such a direction as causes the gas passage 21 to be closed from the inside of the upper wall of the case 20, thereby providing gas outlets 19.

The end of the hinged side of the intracase pressure-sensing board 23 is fitted with a downward projecting operation arm 25. A safety switch 26 is set inside of the upper wall of the case 20 in a state facing the free end of the operation arm 25. When the intracase pressure-sensing board 23 swings through a prescribed angle (to the imaginary lines given in Fig. 3), then a switch 26 is closed by the free end of the operation arm 25. Conversely when released from the free end of the operation arm 25, the switch 26 is opened.

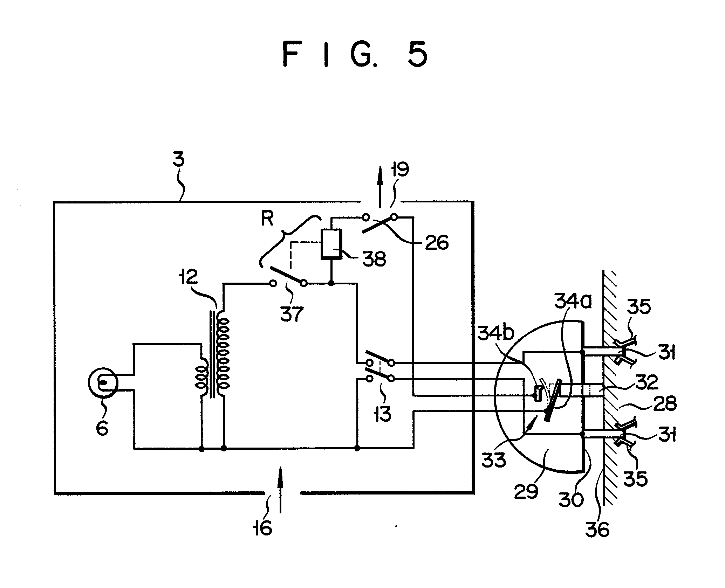

The rear wall of the case 3 is penetrated by a power supply cord 27 in airtightness. The outer end of said power supply cord 27 is fitted with an electric plug 29 which can be inserted into, for example, a commercial power supply socket 28 (Fig. 5). As seen from Fig. 5, a pair of parallel terminal rods 31 are projectively and spatially provided on the outer end face 30 of the electric plug 29. A pin-shaped detector 32 is provided between said paired terminal rods 31. The detector 32 is made to slide in airtightness out of the end face 30 of the electric plug 29, thereby controlling the operation of a power supply switch 33 sealed in said electric plug 29. The movable contact 34a of the power supply switch 33 is formed of a plate spring, which is normally set apart from the stationary contact 34b to leave the power supply switch 33 open. The movable contact (that is, the plate spring) normally urges the inner end face of the detector 32 to let its outer end face project from the power supply socket 28. When the paired contacts 31 of the electric plug 29 are inserted into the power supply socket 28 for connection to the corresponding contacts 35 thereof, then the detector 32 touches the outer surface 36 of said power supply socket 28. When further pushed, the detector 32 is moved toward the electric plug 29 by said outer surface 36, thereby closing the power supply switch 33.

Fig. 5 shows the circuit of the electric apparatus embodying this invention. The paired contacts 31 of the electric plug 29 are connected to the primary winding of a transformer 12 through a power supply circuit. Said paired contacts 31 are connected to the primary winding of the transformer 12 through a power supply switch 13 and the normally open contact 37 of a relay switch R. Connected in series between the output terminals of the power supply switch 13 are a power supply switch 33, safety switch 26 and the solenoid 38 of the relay switch R. A lamp 6 is connected to the secondary winding of the transformer 12.

Description is now given of the operation of an endoscope light source device according to the above-mentioned embodiment of this invention.

When an endoscope light guide connector 4 is fitted into a connector inlet port 5, and the cock 17 of a gas inlet port 16 is opened (Fig. 2), then a compressed uninflammable gas is carried from the gas cylinder 2 into the case 3. The uninflammable gas taken into the case 3 expels another gas previously remaining in the case 3 to the outside through the gas passage 21 and exhaust port 19 (Fig. 3). At the gas passage 21, the sensing board 23 is made to swing by being pushed by a gas stream flowing through said gas passage 21, causing the safety switch 26 to be closed by an operation arm 25. Later, the electric plug 29 is inserted into the plug socket 28 for electric connection. When, as shown in Fig. 5, the paired contacts 31 of the electric plug 29 fully contact the corresponding contacts 35 of the power supply plug socket 28, then the outer end face of the detector 32 is pressed against the outer surface 36 of the plug socket 28. When the electric plug 29 is further pushed in, the detector 32 is inserted thereinto. As a result, the movable contact 34a of the power supply switch 33 is pushed in to close said switch 33.

When the power supply switch 13 (Fig. 5) is closed, power is conducted to the solenoid 38 of the relay switch R, because the safety switch 26 is closed in advance, thereby closing the contact 37 of said relay switch R. As a result, power is supplied to the transformer 12 to light the lamp 6. As seen from the foregoing description, the safety switch 26 and power supply switch 33 have to be closed before the operation of the power supply switch 13. Further, it is necessary to fully fill the case 3 with an uninflammable gas to raise the pressure of said case 3. The pressure in the case 3 is indicated on a pressure gauge 14 (Figs. 1 and 2). It is therefore advised to close the power supply switch 13 after reading an indication on the pressure gauge 14.

When the electric plug 29 is inserted into the plug socket 28 with the power supply swith 13 closed, then the paired contacts 31 first touch the corresponding contacts 35. At this time, however, the detector 32 is not yet actuated, leaving the power supply switch 33 open. Where, therefore, the power supply switch 13 is previously closed, the power supply circuit is shut off, causing no sparks to arise by a short leak. Even if, therefore, an inflammable gas is present in the neighborhood, the gas is not likely to be ignited.

When the electric plug 29 is pulled out of the plug socket 28 with the power supply switch 13 closed, the detector 32 regains its original position before the paired contacts 31 of the electric plug 29 are removed from the corresponding contacts 35, thereby releasing the power supply switch 33. In this case, too, no sparks are likely to take place.

While the endoscope is used, fresh an inflammable gas streams always flow through the case 3 to cool the internal parts, particularly the light guide connector 4, connector inlet port 5 and lamp 6, thereby suppressing the overheating of these members.

When uninflammable gas streams flowing through the case 3 decrease in quantity with the resultant pressure drop therein, then the sensing board 23 is closed by the urging force of the torsion spring 24 to shut off the gas passage 21. At this time the safety switch 26 is actuated to render the whole electric device nonconducting, thereby cutting off power supply to the solenoid 38 of the relay switch R. The contact 37 is immediately left open to extinguish the lamp 6. Even where, therefore, no uninflammable gas streams are brought in, it is possible to suppress the possibility of damaging, for example, the light guide by fire due to the over heating of the lamp 6 which is continuously lighted.

With the foregoing embodiment, an uninflammable gas is supplied from a cylinder 2. However, this invention is not limited to this arrangement. But it is possible to apply an air compressor. Further, this invention need not be exclusively applied to an explosion-proof light source device of an endoscope, but is applicable to any other type of electric device.

As described above, an explosion-proof electric device embodying this invention in which an electric plug is inserted into a power supply socket for electric connection, can suppress the occurrence of short arcs when the electric plug is connected to the socket. Therefore, no explosion is likely to take place even when an inflammable gas prevails in the neighborhood of the electric device, thus assuring great safety.

In the electric apparatus according to the present invention, the power supply circuit means a mechanism and/or circuit which is acturated by supplying a current from the external power source.

Claims:

1. An electric apparatus which comprises:

an electric plug (29) electrically to be connected to an external power plug socket (28);

a power supply circuit (11, 12); and

a power supply switch (33) which is connected between the electric plug and power supply circuit to effect electric switching between the electric plug and power supply circuit; characterized by comprising

a detection element (32) which is projectively provided on the electric plug (29) and actuated when the electric plug is inserted into the power plug socket to close the power supply switch.

2. The electric apparatus according to claim 1, wherein the detection element (32) is made to slide through the electric plug (29), and, when said electric plug is connected to the socket, is moved toward said socket to close the power supply switch.

3. The electric apparatus according to claim 2, wherein the power supply switch (33) comprises a stationary contact (34b) and a movable contact (34a) which is electrically connected to said stationary contact when the detection element (32) is urged outward toward the electric plug.

4. The electric apparatus according to claim 1, which comprises:

a case (3) for receiving the power supply circuit, the power supply socket (28) being set outside of said case;

switch means (19) connected in series to the power supply switch; and

means (26) for closing the switch means (19) when a pressure in the case rises above a prescribed level.

5. The electric apparatus according to claim 4, wherein the case (3) comprises a gas inlet port (16) connected to a source (2) of an uninflammable gas,

0071724

exhaust port (19) open to the outside and a light source (6) held in said case.

OC71724

1/3

F I G. 1

F I G. 2

# F I G. 3

# F I G. 4

# F I G. 5

European Patent
Office

**EUROPEAN SEARCH REPORT**

0071724

Application number

EP   82 10 5473

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 755 635  (W.B. McGILL)<br>* Column 1, lines 52-65; figures * | 1 | H 01 R   13/703<br>G 02 B   23/08 |
| | --- | | |
| Y | DE-B-1 006 906  (TELEFUNKEN)<br>* Column 1, line 48 - column 2, line 35; figures * | 1,2 | |
| | --- | | |
| A | US-A-4 059 843  (F. GIRISMEN)<br>* Column 5, line 6 - column 6, line 29; figures * | 1,4 | |
| | ----- | | |

**TECHNICAL FIELDS SEARCHED (Int. Cl. ³)**

H 01 R   13
G 02 B   23

*The present search report has been drawn up for all claims*

| Place of search | Date of completion of the search | Examiner |
|---|---|---|
| THE HAGUE | 13-10-1982 | RAMBOER P. |